# EUROPEAN PATENT APPLICATION

(11) **EP 4 700 837 A1**
(43) Date of publication of application: **25.02.2026**
(21) Application number: 25196576.0
(22) Date of filing: 19.08.2025
(51) Int. Cl.: H01M 4/04, H01M 4/134, H01M 4/139, H01M 4/62, H01M 10/052, H01M 10/0562, H01M 10/0585, H01M 10/42, H01M 4/02

(54) **ALL-SOLID-STATE BATTERY AND METHOD OF FABRICATING THE SAME**

(30) Priority: 21.08.2024 KR 20240112241
(71) Applicant: SAMSUNG SDI CO., LTD., Yongin-si, Gyeonggi-do 17084 (KR)
(72) Inventor: YOU, Hoseon, 17084 Gyeonggi-do (KR); KIM, Jinhee, 17084 Gyeonggi-do (KR); KANG, Dongwoo, 17084 Gyeonggi-do (KR); OH, Daeyang, 17084 Gyeonggi-do (KR); KIM, MyungSeop, 17084 Gyeonggi-do (KR)
(74) Representative: Michalski Hüttermann & Partner Patentanwälte mbB

(57) **Abstract**

Disclosed are all-solid-state batteries and fabrication methods thereof. The all-solid-state battery includes a positive electrode layer, a negative electrode layer, and a solid electrolyte layer between the positive electrode layer and the negative electrode layer. At least one of the positive electrode layer and the solid electrolyte layer includes a lubricant additive. The lubricant additive includes one of a first compound that includes a repeating unit, a second compound that includes a repeating unit, and a combination of the first compound and the second compound.

## Description

### CROSS-REFERENCE TO RELATED APPLICATIONS

This application claims priority under 35 U.S.C § 119 to Korean Patent Application No. 10-2024-0112241 filed on August 21, 2024 in the Korean Intellectual Property Office, and the disclosure of which is hereby incorporated by reference in its entirety.

### BACKGROUND

The present disclosure relates to an all-solid-state battery and a method of fabricating the all-solid-state battery, and more particularly, to an all-solid-state battery fabricated by addition of a lubricant additive and process of a low-pressure roll-pressing, and a method of fabricating the all-solid-state battery.

Development of high-energy density and safe batteries is driven by industrial demands. For example, lithium ion batteries are commercialized not only in formation-related and communication devices but also in, e.g., the automotive industry. In the automotive industry, safety is particularly emphasized due to the direct relation thereof to preserving human lives.

There are all-solid-state batteries in which electrolyte solutions are replaced with solid electrolytes. As all-solid-state batteries do not use flammable organic dispersion mediums, the possibility of fire or explosion may be significantly reduced even in the event of short-circuit. Therefore, compared to lithium ion batteries that use electrolyte solutions, all-solid-state batteries may have greatly increased safety.

### SUMMARY

Some example embodiments of the present disclosure include a lubricant additive for increasing formability and elongation of an electrode plate.

Some example embodiments of the present disclosure include a method of fabricating an all-solid-state battery capable of being manufactured by a low-pressure roll-pressing.

According to some example embodiments of the present disclosure, an all-solid-state battery may include a positive electrode layer; a negative electrode layer; and a solid electrolyte layer between the positive electrode layer and the negative electrode layer. At least one of the positive electrode layer and the solid electrolyte layer may include a lubricant additive. The lubricant additive may include one of a first compound that includes a repeating unit represented by Chemical Formula 1; a second compound that includes a repeating unit represented by Chemical Formula 2; and a combination of the first compound and the second compound.

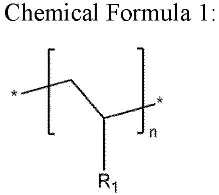

In Chemical Formula 1, n may be an integer in a range between 5 and 50, and R₁ may be or include a hydroxyl group, a methyl group, an amino group, an acryl group, benzene, acrylonitrile, amide, an alkyl group, or a carboxyl group.

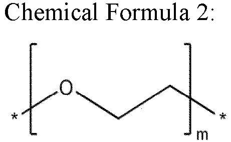

In Chemical Formula 2, m may be an integer in a range between 5 and 50.

According to some example embodiments of the present disclosure, an all-solid-state battery may include a positive electrode layer; a negative electrode layer; and a solid electrolyte layer between the positive electrode layer and the negative electrode layer. At least one of the positive electrode layer and the solid electrolyte layer may include a lubricant additive. The lubricant additive may have a molecular weight in a range of ≥ 200 g/mol to ≤ 2,000 g/mol; and a friction coefficient in a range of ≥ 0.01 to ≤ 0.1.

According to some example embodiments of the present disclosure, a method of fabricating an all-solid-state battery may include mixing a positive electrode active material, a binder, and a lubricant additive with each other to prepare a positive electrode slurry; coating on a positive electrode current collector the positive electrode slurry to form a positive electrode active material layer; and stacking, e.g., sequentially stacking, a solid electrolyte layer and a negative electrode layer on the positive electrode active material layer. The lubricant additive may include one of a first compound that includes a repeating unit represented by Chemical Formula 1; a second compound that includes a repeating unit represented by Chemical Formula 2; and a combination of the first compound and the second compound.

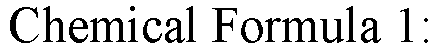

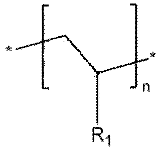

In Chemical Formula 1, n may be an integer in a range between 5 and 50, and R₁ may be or include a hydroxyl group, a methyl group, an amino group, an acryl group, benzene, acrylonitrile, amide, an alkyl group, or a carboxyl group.

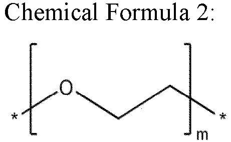

In Chemical Formula 2, m may be an integer in a range between 5 and 50.

### BRIEF DESCRIPTION OF DRAWINGS

FIG. 1 illustrates a cross-sectional view showing an all-solid-state battery, according to some example embodiments of the present disclosure.
FIG. 2 illustrates a plan view showing an all-solid-state battery, according to some example embodiments of the present disclosure.
FIG. 3 illustrates a cross-sectional view showing an all-solid-state battery, according to some example embodiments of the present disclosure.
FIG. 4 illustrates a cross-sectional view showing a positive electrode layer of an all-solid-state battery, according to some example embodiments of the present disclosure.
FIG. 5 illustrates an enlarged view showing section M1 before pressing of a positive electrode layer, according to some example embodiments of the present disclosure depicted in FIG. 4.
FIG. 6 illustrates an enlarged view showing section M1 after pressing of a positive electrode layer, according to some example embodiments of the present disclosure depicted in FIG. 4.
FIG. 7 illustrates a cross-sectional view showing a negative electrode layer, according to some example embodiments of the present disclosure.
FIG. 8 illustrates a conceptual diagram showing a pressing step for fabricating an all-solid-state battery, according to some example embodiments of the present disclosure.
FIG. 9 illustrates a flow chart showing a method of fabricating an all-solid-state battery, according to some example embodiments of the present disclosure.
FIG. 10 illustrates a graph showing compressibility characteristics of an all-solid-state battery, according to some example embodiments of the present disclosure.

### DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

When the terms "about" or "substantially" are included in this specification in connection with a numerical value, it is intended that the associated numerical value include a tolerance of ±10% around the stated numerical value. When ranges are specified, the range includes all values therebetween such as increments of 0.1%.

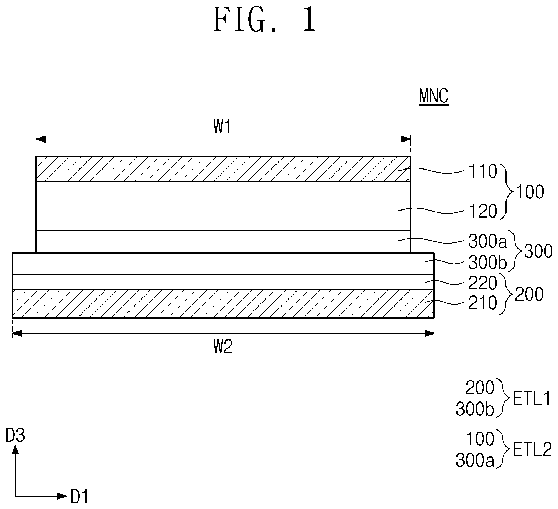

FIG. 1 illustrates a cross-sectional view showing an all-solid-state battery according to some example embodiments of the present disclosure. Referring to FIG. 1, a mono-cell MNC of an all-solid-state battery according to an example embodiment of the present disclosure is illustrated. The mono-cell MNC may include a positive electrode layer 100, a negative electrode layer 200 opposite to the positive electrode layer 100, and a solid electrolyte layer 300 between the positive electrode layer 100 and the negative electrode layer 200. The present disclosure, however, is not limited thereto, and the mono-cell MNC may further include an additional functional layer (not shown), such as an adhesion enhancement layer, between the positive electrode layer 100 and the solid electrolyte layer 300 or between the negative electrode layer 200 and the solid electrolyte layer 300.

The positive electrode layer 100 may include a positive electrode current collector 110, and a positive electrode active material layer 120 on the positive electrode current collector 110. The positive electrode active material layer 120 may include at least one of a positive electrode active material, a solid electrolyte, a conductive material, and a binder.

The positive electrode current collector 110 may provide a reference surface on which the positive electrode active material layer 120 is formed. The positive electrode current collector 110 may have a plate or foil shape. For example, the positive electrode current collector 110 may include at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In an example embodiment of the present disclosure, the positive electrode current collector 110 may be omitted. Although not shown, in order to increase adhesion between the positive electrode current collector 110 and the positive electrode active material layer 120, a carbon layer with a thickness in a range of ≥ 0.1 µm to ≤ 4 µm may further be disposed between the positive electrode current collector 110 and the positive electrode active material layer 120.

The positive electrode active material may include a material that can reversibly absorb and desorb lithium ions. For example, the positive electrode active material may include at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be, for example, a compound represented by one of LiₐA_{1-b}B_{b}D₂ (where 0.90≤a≤1 and 0≤b≤0.5), LiₐE_{1-b}B_{b}O_{2-c}D_{c} (where 0.90≤a≤1, 0≤b≤0.5, and 0≤c≤0.05), LiE_{2-b}B_{b}O_{4-c}D_{c} (where 0≤b≤0.5 and 0≤c≤0.05), LiₐNi_{1-b-c}Co_{b}B_{c}D_{α} (where 0.90≤a≤1, 0≤b≤0.5, 0≤c≤0.05, and 0<α<2), LiₐNi_{1-b-c}Co_{b}B_{c}O_{2-α}F_{α} (where 0.90≤a≤1, 0≤b≤0.5, 0≤c≤0.05, and 0<α<2), LiₐNi_{1-b-c}Mn_{b}B_{c}D_{α} (where 0.90≤a≤1, 0≤b≤0.5, 0≤c≤0.05, and 0<α≤2), LiₐNi_{1-b-c}Mn_{b}B_{c}O_{2-α}F_{α} (where 0.90≤a≤1, 0≤b≤0.5, 0≤c≤0.05, and 0<α<2), LiₐNi_{b}E_{c}G_{d}O₂ (where 0.90≤a≤1, 0≤b≤0.9, 0≤c≤0.5, and 0.001≤d≤0.1), LiₐNi_{b}Co_{c}Mn_{d}GₑO₂ (where 0.90≤a≤1, 0≤b≤0.9, 0≤c≤0.5, 0≤d≤0.5, and 0.001≤e≤0.1), LiₐNiG_{b}O₂ (where 0.9≤a≤1 and 0.001≤b≤0.1), LiₐCoG_{b}O₂ (where 0.90≤a≤1 and 0.001≤b≤0.1), LiₐMnG_{b}O₂ (where 0.90≤a≤1 and 0.001≤b≤0.1), LiₐMn₂G_{b}O₄ (where 0.90≤a≤1 and 0.001≤b≤0.1), QO₂, QS₂, LiQS₂, V₂O₅, LiV₂O₅, LiIO₂, LiNiVO₄, Li_{3-f}J₂(PO₄)₃ (where 0≤f≤2), Li_{3-f}Fe₂(PO₄)₃ (where 0≤f≤2), LiFePO₄. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are displaced from each other by 1/2 of a ridge of a unit lattice. The lithium transition metal oxide having the layered rock salt type structure may be or include a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material includes a ternary lithium transition metal oxide having the layered rock salt type structure, the mono-cell MNC may have increased energy density and improved thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be any one of methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the mono-cell MNC may increase to reduce metal elution from the positive electrode active material in a charged state. Therefore, the mono-cell MNC may improve in cycle characteristics in a charged state. The language "cycle characteristics" may refer to properties that indicate the degree to which the mono-cell MNC is degraded due to charge and discharge. For example, the mono-cell MNC with high cycle characteristics may degrade less due to charge and discharge, while the mono-cell MNC with low cycle characteristics may degrade more due to charge and discharge.

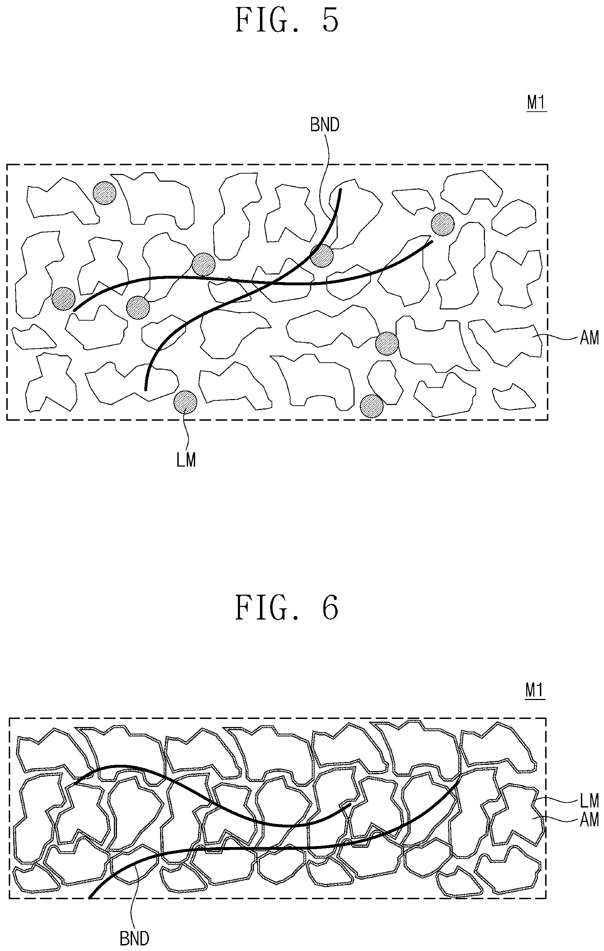

The positive electrode active material may have, for example, a substantially spherical or substantially oval particle shape. There is no limitation on a particle diameter and an amount of the positive electrode active material. FIGS. 5 and 6, which are discussed below, illustrate an irregularly shaped positive electrode active material AM.

The solid electrolyte may include a sulfide-based solid electrolyte with desired or improved lithium ion conductivity. The sulfide-based solid electrolyte may include, for example, at least one of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes at least one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).

The sulfide-based solid electrolyte may be or include an argyrodite-type compound including, for example, at least one of Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li₇₋ₐMₐPS_{6-c}X_{c} (where 0≤a≤2 and 0≤c≤2). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to hinder or prevent a solid electrolyte layer from short-circuit and penetration caused by the formation of lithium dendrite. The solid electrolyte may have an elastic modulus in a range of, for example, ≥ 15 GPa to ≤ 35 GPa.

The solid electrolyte included in the positive electrode active material layer 120 may have a medium-sized average particle diameter (D₅₀) that is less than the average particle diameter of a solid electrolyte included in the solid electrolyte layer 300. For example, the medium-sized average particle diameter (D₅₀) of the solid electrolyte in the positive electrode active material layer 120 may be about equal to or less than about 90%, equal to or less than about 80%, equal to or less than about 70%, equal to or less than about 60%, equal to or less than about 50%, equal to or less than about 40%, equal to or less than about 30%, or equal to or less than about 20% of the medium-sized average particle diameter (D₅₀) of a solid electrolyte included in the solid electrolyte layer 300. The medium-sized average particle diameter (D₅₀) may be a median diameter measured by a laser particle size distribution analyzer.

The positive electrode active material layer 120 may include a conductive material. The conductive material may have conductivity without causing chemical change to the mono-cell MNC, and may increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may include a material that adheres the positive electrode active material, the solid electrolyte, and the conductive material included in the positive electrode active material layer 120 to each other, and that improves adhesion between the positive electrode active material layer 120 and the positive electrode current collector 110. The binder may include, for example, at least one of polyvinylidenefluoride, styrene-butadiene rubber (SBR), polytetrafluoroethylene, vinylidenefluoride/hexafluoropropylene copolymer, polyacrylonitrile, or polymethyl methacrylate.

In the positive electrode active material layer 120, the positive electrode active material may be included in an amount in a range of ≥ 85 parts by weight to ≤ 92 parts by weight relative to 100 parts by weight of a sum of the positive electrode active material, the solid electrolyte, the conductive material, and the binder. The binder may be included in an amount in a range of ≥ 0.5 parts by weight to ≤ 1.5 parts by weight in the positive electrode active material layer 120.

In the positive electrode active material layer 120, the conductive material may be present in an amount in a range of ≥ 1 part by weight to ≤ 50 parts by weight relative to 100 parts by weight of the solid electrolyte. When the conductive material is present in an amount that is less than about 1 part by weight relative to 100 parts by weight of the solid electrolyte, the positive electrode active material layer 120 may decrease in electrical conductivity. When the conductive material is present in an amount that is greater than about 50 parts by weight relative to 100 parts by weight of the solid electrolyte, a proportion of the conductive material may substantially increase to cause incomplete formation of a coating layer that covers a surface of the solid electrolyte.

According to some example embodiments, the positive electrode active material layer 120 may further include at least one additive such as or including at least one of a filler, a coating agent, a dispersant, and an ion conductivity agent, in addition to the positive electrode active material, the solid electrolyte, the conductive material, and the binder.

The solid electrolyte layer 300 may be disposed between the positive electrode layer 100 and the negative electrode layer 200, and may include a sulfide-based solid electrolyte with desired or improved lithium ion conductivity. The solid electrolyte included in the solid electrolyte layer 300 may include a material that is the same as, or different from, the materials included in the solid electrolyte of the positive electrode active material layer 120.

In an example embodiment, the solid electrolyte layer 300 may include a sulfide-based solid electrolyte. The sulfide-based solid electrolyte may be prepared by, for example, melting and quenching or mechanically milling a starting raw material such as Li₂S or P₂S₅. In addition, the resulting product may be thermally treated after the treatment mentioned above. The solid electrolyte may be in an amorphous state, a crystalline state, or a mixed state of amorphous and crystalline states. The solid electrolyte may include at least one of sulfur (S), phosphorus (P), and lithium (Li) among component elements included in the sulfide-based solid electrolyte mentioned above. For example, the solid electrolyte may be or include a material including Li₂S-P₂S₅. When a material including Li₂S-P₂S₅ is included as a sulfide-based solid electrolyte material of the solid electrolyte, a mixing molar ratio of Li₂S and P₂S₅ may be in a range of about 50:50 to about 90:10.

The sulfide-based solid electrolyte may be or include an argyrodite-type compound including, for example, at least one of Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, the sulfide-based solid electrolyte may be or include an argyrodite-type compound including at least one of Li₆PS₅Cl, Li₆PS₅Br, and Li₆PS₅I.

In another example, the sulfide-based solid electrolyte may be or include an argyrodite-type compound including Li₇₋ₐMₐPS_{6-c}X_{c} (where 0≤a≤2 and 0≤c≤2). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to hinder or prevent a solid electrolyte layer from short-circuit and penetration caused by the formation of lithium dendrite. The solid electrolyte may have an elastic modulus in a range of, for example, ≥ 15 GPa to ≤ 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, or polyethylene, but the present disclosure is not limited thereto. The binder of the solid electrolyte layer 300 may be the same as, or similar to, the binder of the positive electrode active material layer 120, or the binder of a negative electrode coating layer 220 which is discussed below.

The negative electrode layer 200 may include a negative electrode current collector 210 and a negative electrode coating layer 220 on the negative electrode current collector 210. The negative electrode current collector 210 may provide a reference surface on which the negative electrode coating layer 220 is disposed. The negative electrode current collector 210 may include a material that does not react, or does not substantially react, with lithium, for example, a material that does not form an alloy or a compound with lithium. For example, the negative electrode current collector 210 may include at least one of copper (Cu), stainless steel, titanium (Ti), iron (Fe), cobalt (Co), and nickel (Ni). A thickness of the negative electrode current collector 210 may range from ≥ 1 µm to ≤ 20 µm, for example, from ≥ 5 µm to ≤ 15 µm or from ≥ 7 µm to ≤ 10 µm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode coating layer 220 may induce growth of lithium metal between the negative electrode coating layer 220 and the negative electrode current collector 210 when the mono-cell MNC is charged. The negative electrode coating layer 220 may be configured as a protection layer for lithium metal, and simultaneously or contemporaneously may reduce or suppress precipitation and growth of lithium dendrite.

The negative electrode coating layer 220 may include metal and carbon. For example, the negative electrode coating layer 220 may include at least one of magnesium (Mg), gold (Au), platinum (Pt), palladium (Pd), silicon (Si), silver (Ag), aluminum (Al), bismuth (Bi), tin (Sn), and zinc (Zn). The negative electrode coating layer 220 may include at least one of carbon black, acetylene black, furnace black, Ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one of, for example, a binder, a filler, a coating agent, a dispersant, and an ion conductivity agent.

The negative electrode coating layer 220 may have a thickness that is less than the thickness of the positive electrode active material layer 120. For example, the negative electrode coating layer 220 may have a thickness that is equal to or less than about 50%, equal to or less than about 40%, equal to or less than about 30%, equal to or less than about 20%, equal to or less than about 10%, or equal to or less than about 5% of the thickness of the positive electrode active material layer 120. The negative electrode coating layer 220 may have a thickness in a range of, for example, ≥ 1 µm to ≤ 20 µm, ≥ 2 µm to ≤ 10 µm, or ≥ 3 µm to ≤ 7 µm. When the negative electrode coating layer 220 has a substantially small thickness, lithium dendrite formed between the negative electrode coating layer 220 and the negative electrode current collector 210 may collapse the negative electrode coating layer 220 to reduce cycle characteristics of the mono-cell MNC. When the negative electrode coating layer 220 has a substantially large thickness, the mono-cell MNC may have a decreased energy density and an increased internal resistance caused by the negative electrode coating layer 220, thereby reducing cycle characteristics of the mono-cell MNC.

Although not shown, a carbon layer may further be included to increase adhesion between the negative electrode coating layer 220 and the solid electrolyte layer 300.

According to some example embodiments of the present disclosure, the positive electrode layer 100 may have a width that is less than the width of the negative electrode layer 200. For example, the positive electrode layer 100 may have a first width W1 in a first direction D1, and the negative electrode layer 200 may have a second width W2 in the first direction D1. The first width W1 may be less than the second width W2. As the first width W1 is less than the second width W2, the positive electrode layer 100 may further be provided on the circumference thereof with a gasket to compensate the difference in width.

According to some example embodiments of the present disclosure, the solid electrolyte layer 300 may include a positive electrode solid electrolyte layer 300a and a negative electrode solid electrolyte layer 300b. The positive electrode solid electrolyte layer 300a and the negative electrode solid electrolyte layer 300b may be stacked to constitute a solid electrolyte layer 300. The positive electrode solid electrolyte layer 300a may be in contact with the positive electrode active material layer 120, and the negative electrode solid electrolyte layer 300b may be in contact with the negative electrode coating layer 220.

For example, the positive electrode solid electrolyte layer 300a and the negative electrode solid electrolyte layer 300b may have solid electrolytes having the same composition. Alternatively, the positive electrode solid electrolyte layer 300a and the negative electrode solid electrolyte layer 300b may include solid electrolytes having different compositions from each other.

The positive electrode solid electrolyte layer 300a may have the first width W1, and the negative electrode solid electrolyte layer 300b may have the second width W2. For example, the positive electrode solid electrolyte layer 300a may have a width that is less than the width of the negative electrode solid electrolyte layer 300b. The first width W1 of the positive electrode solid electrolyte layer 300a may be less than the second width W2 of the negative electrode solid electrolyte layer 300b. As the first width W1 of the positive electrode solid electrolyte layer 300a is less than the second width W2 of the negative electrode solid electrolyte layer 300b, the positive electrode solid electrolyte layer 300a may further be provided on the circumference thereof with a gasket to compensate the difference in width.

Referring still to FIG. 1, the negative electrode layer 200 and the negative electrode solid electrolyte layer 300b may constitute a first electrode layer ETL1. The positive electrode layer 100 and the positive electrode solid electrolyte layer 300a may constitute a second electrode layer ETL2.

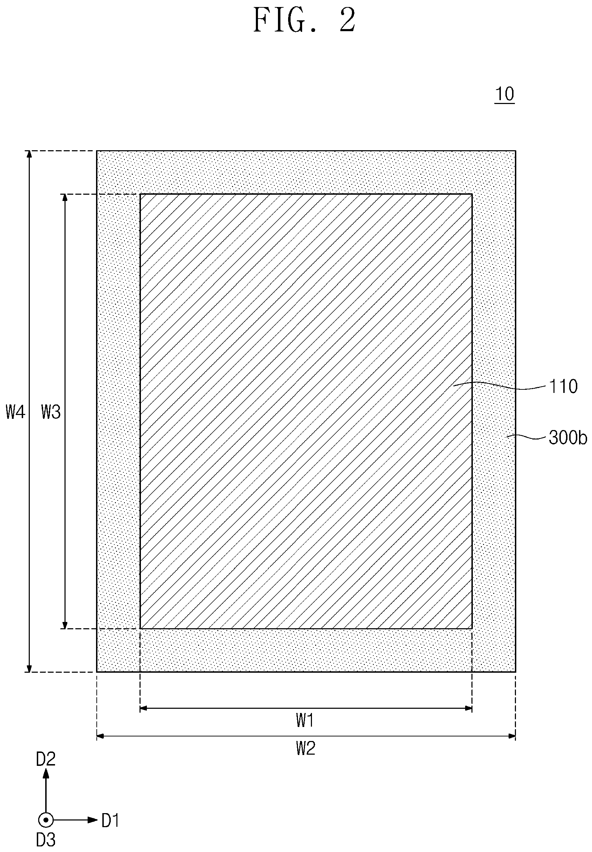

FIG. 2 illustrates a plan view showing an all-solid-state battery according to some example embodiments of the present disclosure. Referring to FIGS. 1 and 2, the positive electrode solid electrolyte layer 300a may have the first width W1 in the first direction D1. The negative electrode solid electrolyte layer 300b may have the second width W2 in the first direction D1. The first width W1 may be less than the second width W2.

A difference between the second width W2 and the first width W1 may be equal to or less than about 10 mm. For example, the difference between the second width W2 and the first width W1 may be equal to less than about 8 mm, equal to or less than about 5 mm, or equal to or less than about 3 mm. The difference between the second width W2 and the first width W1 may be equal to greater than about 0.1 mm, equal to or greater than about 0.5 mm, or equal to or greater than about 1 mm. When the width difference is greater than the ranges above, a size of the positive electrode layer 100 may be relatively reduced to decrease a discharge capacity and an energy density of the all-solid-state battery 10. When the width difference is less than the ranges above, it may be difficult to reduce or suppress the formation of lithium dendrite in a negative electrode, and accordingly there may be a likelihood of occurrence of short circuit.

A ratio (W2/W1) of the second width W2 to the first width W1 may range from ≥ 1 to ≤ 1.6. For example, the ratio (W2/W1) of the second width W2 to the first width W1 may range from ≥ 1 to ≤ 1.5, from ≥ 1 to ≤ 1.4, from ≥ 1 to ≤ 1.3, from ≥ 1 to ≤ 1.2, or from ≥ 1 to ≤ 1.1.

When the ratio (W2/W1) of the second width W2 to the first width W1 is greater than the ranges above, the all-solid-state battery 10 may have a reduced energy density.

Referring still to FIGS. 1 and 2, the positive electrode solid electrolyte layer 300a may have a third width W3 in a second direction D2. The negative electrode solid electrolyte layer 300b may have a fourth width W4 in the second direction D2. The third width W3 may be less than the fourth width W4.

A difference between the third width W3 and the fourth width W4 may be equal to or less than about 10 mm. For example, the difference between the third width W3 and the fourth width W4 may be equal to or less than about 8mm, equal to or less than about 5 mm, or equal to or less than about 3 mm. The difference between the third width W3 and the fourth width W4 may be equal to greater than about 0.1 mm, equal to or greater than about 0.5 mm, or equal to or greater than about 1 mm. When the width difference is greater than the ranges above, a size of the positive electrode layer 100 may be relatively reduced to decrease a discharge capacity and an energy density of the all-solid-state battery 10. When the width difference is less than the ranges above, it may be difficult to reduce or suppress the formation of lithium dendrite in a negative electrode, and accordingly there may be a likelihood of occurrence of short circuit.

A ratio (W4/W3) of the fourth width W4 to the third width W3 may range from ≥ 1 to ≤ 1.6. For example, the ratio (W4/W3) of the fourth width W4 to the third width W3 may range from ≥ 1 to ≤ 1.5, from ≥ 1 to ≤ 1.4, from ≥ 1 to ≤ 1.3, from ≥ 1 to ≤ 1.2, or from ≥ 1 to ≤ 1.1.

When the ratio (W4/W3) of the fourth width W4 to the third width W3 is greater than the ranges above, the all-solid-state battery 10 may have a reduced energy density.

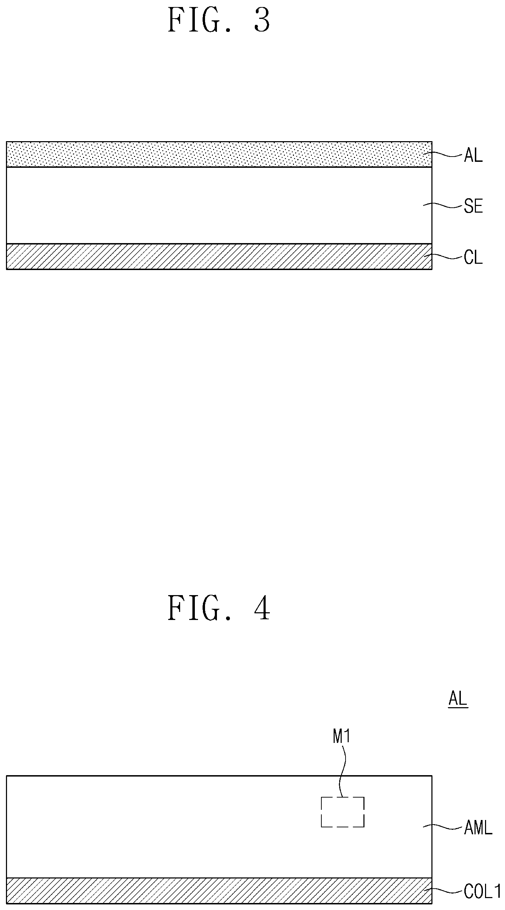

FIG. 3 illustrates a cross-sectional view showing an all-solid-state battery, according to some example embodiments of the present disclosure. Referring to FIG. 3, an all-solid-state battery may include a positive electrode layer AL, a negative electrode layer CL, and a solid electrolyte layer SE between the positive electrode layer AL and the negative electrode layer CL. The solid electrolyte layer SE may be formed on the negative electrode layer CL. In addition, the positive electrode layer AL may be formed on the solid electrolyte layer SE.

The positive electrode layer AL may include a positive electrode active material AM, a binder BND, and a lubricant additive LM which are discussed below (see FIG. 5 or 6). The positive electrode active material AM and the binder BND may be the same as the positive electrode active material and the binder discussed above with respect to FIG. 1. The following description focuses on differences.

The lubricant additive LM may be included in the positive electrode layer AL. The positive electrode layer AL of FIG. 3 may be substantially the same as, or similar to, the positive electrode layer 100 discussed above with respect to FIG. 1. The lubricant additive LM may further be included in a positive electrode active material layer (see AML of FIG. 4) in the positive electrode layer AL.

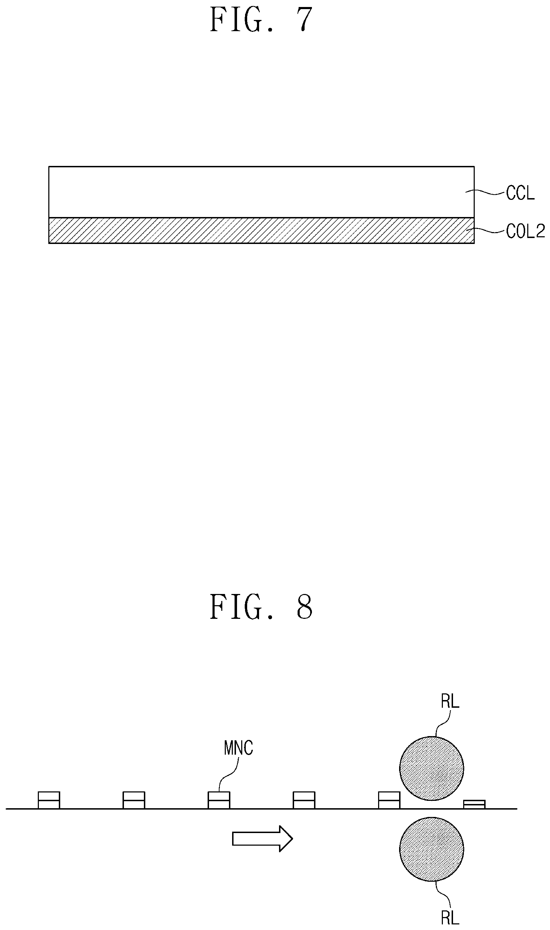

The negative electrode layer CL may include a negative electrode current collector COL2 and a negative electrode coating layer CCL on the negative electrode current collector COL2, as illustrated in FIG. 7. With regard to the negative electrode layer CL, the following description focuses on differences in addition to the contents discussed above with respect to FIG. 1. The negative electrode layer CL of FIG. 3 may be substantially the same as the negative electrode layer 200 of FIG. 1.

The negative electrode coating layer CCL may include at least one of gold (Au), platinum (Pt), palladium (Pd), silicon (Si), silver (Ag), aluminum (Al), bismuth (Bi), tin (Sn), and zinc (Zn) and at least one of carbon black, acetylene black, furnace black, Ketjen black, and graphene.

The solid electrolyte layer SE may be located between the positive electrode layer AL and the negative electrode layer CL. A description of the solid electrolyte layer SE may be as described above with respect to FIG. 1. The solid electrolyte layer SE of FIG. 3 may be substantially the same as the solid electrolyte layer 300 of FIG. 1.

The solid electrolyte layer SE may include a solid electrolyte and a lubricant additive LM.

The lubricant additive LM may be included in the positive electrode active material layer AML or the solid electrolyte layer SE. Alternatively, the lubricant additive LM may be included both in the positive electrode active material layer AML and in the solid electrolyte layer SE.

The lubricant additive LM may be included to increase fluidity of an electrode plate. The lubricant additive LM may be included to increase fluidity of the positive electrode layer AL. In addition, the lubricant additive LM may be included to increase fluidity of the solid electrolyte layer SE. When fluidity of an electrode plate increases, the electrode plate may be hindered from fracture or detachment occurring after a pressing process. Moreover, when fluidity of an electrode plate increases, the positive electrode layer AL or the solid electrolyte layer SE may be densely combined even without being pressed at a high pressure. An electrode plate may refer to the positive electrode layer AL, the solid electrolyte layer SE, or a combination of the positive electrode layer AL, the solid electrolyte layer SE, and the negative electrode layer CL.

The lubricant additive LM may be or include a material having non-volatility, non-reactivity, and formability. An electrode plate containing the lubricant additive LM may have fluidity compared to an electrode plate containing no lubricant additive. The lubricant additive LM may be present in the form of solid particles at room temperature. In addition, the lubricant additive LM may behave like a soft solid or a liquid at a temperate above a given point. This is discussed below with respect to FIGS. 5 and 6.

The lubricant additive LM may include a compound including a repeating unit represented by Chemical Formula 1, a compound including a repeating unit represented by Chemical Formula 2, or a combination thereof.

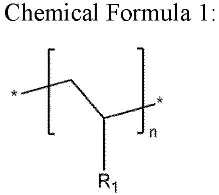

In Chemical Formula 1, n may be an integer in a range between 1 and 100. Alternatively, n may be an integer in a range between 5 and 100, between 5 and 50, or between 5 and 20.

R₁ may include a hydroxyl group, a methyl group, an amino group, an acryl group, benzene, acrylonitrile, amide, an alkyl group, a carboxyl group, or any other suitable functions including a material having non-volatility or formability properties.

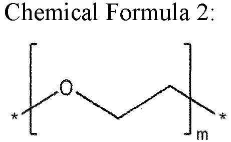

In Chemical Formula 2, m may be an integer in a range between 1 and 100. Alternatively, m may be an integer in a range between 5 and 100, between 5 and 50, or between 5 and 20.

In Chemical Formulae 1 and 2, " 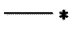 " may indicate a position to which a given functional group (or a substituent) is bonded.

The lubricant additive LM may include at least one of paraffin, low molecular weight polyethylene oxide (PEO), low molecular weight polyethylene (PE), low molecular weight polypropylene (PP), hexadecane, octadecane, tetracosanoic acid, eicosane, triacontane, and polyalphaolefin (PAO). The low molecular weight polyethylene oxide (PEO) and low molecular weight polyethylene (PE) may each have a carbon number in a range between 5 and 20.

The lubricant additive LM may further include a lithium salt. The lithium salt may be included in an all-solid-state battery or a rechargeable lithium battery. The lubricant additive LM may be dielectric, and thus when the lubricant additive LM is added to an electrode plate, the lithium salt may be included to improve electrical conductivity. For example, the lithium salt may include at least one of LiSCN, LiSCN, LiN(CN)₂, Li(CF₃SO₂)₃C, Li(FSO₂)₂N(LiFSI), LiC₄F₉SO₃, LiN(SO₂CF₂CF₃)₂, LiPF₃(C₂F₅)₃, LiCl, LiF, LiBr, LiI, LiB(C₂O₄)₂, LiPF₆, LiPF₅(CF₃), LiPF₅(C₂F₅), LiPF₅(C₃F₇), LiPF₄(CF₃)₂, LiPF₄(CF₃)(C₂F₅), LiPF(CF₃)₃, LiPF₃(CF₂CF₃)₃, LiPF₄(C₂O₄)₂, LiBF₄, LiBF₃(C₂F₅), lithium bis(oxalato)borate (LiBOB), lithium oxalyl difluoroborate (LiODFB), lithium difluoro(oxalato)borate (LiDFOB), lithium bis(trifluoromethanesulfonyl)imide (LiTFSI, LiN(SO₂CF₃)₂), lithium bis(fluorosulfonyl)imide (LiFSI, LiN(SO₂F)₂), LiN(SO₂C₂F₅)₂, LiCF₃SO₃, LiAsF₆, LiSbF₆,, and LiClO₄.

The lubricant additive LM may have a molecular weight in a range of ≥ 100 g/mol to ≤ 3,000 g/mol, ≥ 100 g/mol to ≤ 2,000 g/mol, or ≥ 200 g/mol to ≤ 2,000 g/mol.

The lubricant additive LM may have a friction coefficient in a range of ≥ 0.01 to ≤ 0.1. The friction coefficient of the lubricant additive LM may be measured by, e.g., a tribometer, an inclined plane method, a pin-on-disk method, and the like.

The friction coefficient may be defined as a ratio of the friction force occurring when two surfaces are in contact to the force acting normal to the surfaces.

The tribometer may be a device that measures a friction force by preparing one surface coated with a lubricant to be tested and another surface in contact with the one surface, and then causing relative movement between the two surfaces.

The inclined plane method may be a way of measuring a friction coefficient by placing an object on an inclined surface coated with a lubricant, and gradually increasing an angle of the inclined surface until the object begins to move, and the angle at which the object begins to move is used to determine the friction coefficient.

The pin-on-disk method may be a way of bringing a pin coated with a lubricant into contact with a surface of a rotating disk to measure a friction force generated during rotation. The measured friction force may be used to determine a friction coefficient.

The lubricant additive LM may have a friction coefficient in a range of ≥ 0.01 to ≤ 0.1. For example, the friction coefficient of the lubricant additive LM may range from ≥ 0.04 to ≤ 0.1, from ≥ 0.05 to ≤ 0.1, or from ≥ 0.05 to ≤ 0.08.

Under the condition of the same temperature, an increase in friction coefficient of the lubricant additive LM may cause an increase in viscosity of the lubricant additive LM. In addition, under the condition of the same temperature, a reduction in friction coefficient of the lubricant additive LM may cause a reduction in viscosity of the lubricant additive LM. Therefore, an increase in friction coefficient of the lubricant additive LM may cause a reduction in fluidity of an electrode plate to which the lubricant additive LM is added.

FIG. 4 illustrates a cross-sectional view showing the positive electrode layer AL of an all-solid-state battery, according to some example embodiments of the present disclosure. Referring to FIG. 4, the positive electrode layer AL may include a positive electrode current collector COL1 and a positive electrode active material layer AML on the positive electrode current collector COL1. The positive electrode active material layer AML may include a positive electrode active material AM, a binder BND, and a lubricant additive LM (see FIG. 5 or 6).

The positive electrode active material AM and the binder BND may be the same as the positive electrode active material and the binder discussed above with respect to FIGS. 1 and 3. Referring still to FIG. 4, the lubricant additive LM may be present in an amount in a range of ≥ 0.1 wt% to ≤ 1.0 wt% in the positive electrode active material AM. In addition, the lubricant additive LM may be present in an amount in a range of ≥ 0.5 wt% to ≤ 1.0 wt% in the positive electrode active material AM, but the present disclosure is not limited thereto. When the lubricant additive LM in the positive electrode active material AM is included in an amount that is greater than about 1.0 wt%, resistance in the positive electrode active material AM may be increased to reduce performance of an all-solid-state battery. In addition, when the lubricant additive LM in the positive electrode active material AM is included in an amount that is equal to or less than about 1.0 wt%, fluidity of the positive electrode active material layer AML may be reduced and a pressing process may be performed under a low pressure.

FIG. 5 illustrates an enlarged view showing section M1 in a state before pressing of the positive electrode layer AL according to some example embodiments of the present disclosure depicted in FIG. 4. Referring to FIGS. 4 and 5, the lubricant additive LM may be present in the form of solid particles between the positive electrode active materials AM at room temperature. For example, in FIG. 5, either a positive electrode slurry including the lubricant additive LM or a lubricant active material may be separately included in the positive electrode active material layer AML. In addition, a lubricant active material in the positive electrode active material layer AML at room temperature may be spaced apart from the positive electrode active material AM. Afterwards, during a roll-pressing process at a temperature in a range of about 60°C or more, the lubricant additive LM may be changed into a liquid or its similar state.

FIG. 6 illustrates an enlarged view showing section M1 after a roll-pressing process at a temperature in a range of about 60°C or more performed on the positive electrode active material layer AML of FIG. 4. In a temperature in a range of ≥ 43°C to ≤ 60°C, the lubricant additive LM may be present in a liquid state. For example, the lubricant additive LM may have a melting point in a range of ≥ 43°C to ≤ 60°C. Therefore, the lubricant additive LM may be present in the form of solid particles at room temperature and in the form of a liquid state at a temperature in a range of about 60°C or more, which may result in an increase in fluidity of the positive electrode active material layer AML or the solid electrolyte layer SE.

FIG. 6 depicts an enlarged view showing section M1 in a state after pressing of the positive electrode active material layer AML according to some example embodiments of the present disclosure depicted in FIG. 4. The positive electrode active material layer AML shown in FIG. 6 may be an enlarged view of section M1 after being pressed using a roll-pressing method. When the positive electrode active material layer AML is pressed using a roll-pressing method, a pressing temperature may be equal to or greater than about 60°C. For example, a temperature used for a roll-pressing method may be greater than the melting point of the lubricant additive LM. Referring to FIGS. 5 and 6, the roll-pressing process may be performed at a temperature that is equal to or greater than the melting point of the lubricant additive LM, so that the lubricant additive LM, in the form of solid particles, may be coated on each positive electrode active material AM. For example, the lubricant additive LM, which exists in the form of solid particles at room temperature, may be substantially evenly spread over particles of the positive electrode active materials AM when a temperate is equal to or greater than the melting point of the lubricant additive LM. In addition, the lubricant additive LM, which exists in the form of solid particles at room temperature, may form a coating on a surface of the particles of the positive electrode active material AM when a temperate is equal to or greater than the melting point of the lubricant additive LM.

The lubricant additive LM may be substantially evenly spread over the particles of each positive electrode active material AM and may cause the positive electrode active material layer AML to provide fluidity between the positive electrode active materials AM. Thus, even when being pressed under a low pressure, the positive electrode active material layer AML containing the lubricant additive LM may increase fluidity and formability of an electrode plate to readily achieve close adhesion between the solid electrolyte layer SE and the positive electrode active material layer AML. For example, adhesion between the positive electrode active materials AM may be increased due to the lubricant additive LM coated on the surface of the particles of the positive electrode active material AM. In addition, adhesion between the solid electrolyte particles may be increased due to the lubricant additive LM included in the solid electrolyte layer SE. In addition, the lubricant additive LM may increase adhesion between the solid electrolyte particles and the positive electrode active material AM located in a region where the positive electrode layer AL and the solid electrolyte layer SE are in contact with each other.

Although not shown, the lubricant additive LM may be included even in the solid electrolyte layer SE. Therefore, similar to the description in FIG. 6, the lubricant additive LM included in the solid electrolyte layer SE may be substantially evenly distributed through the solid electrolyte particles.

FIG. 7 illustrates a cross-sectional view showing the negative electrode layer CL, according to some example embodiments of the present disclosure. The negative electrode layer CL may include a negative electrode current collector COL2 and a negative electrode coating layer CCL on the negative electrode current collector COL2. The negative electrode coating layer CCL may include at least one of gold (Au), platinum (Pt), palladium (Pd), silicon (Si), silver (Ag), aluminum (Al), bismuth (Bi), tin (Sn), and zinc (Zn), and at least one of carbon black, acetylene black, furnace black, Ketjen black, and graphene. The negative electrode current collector COL2 and the negative electrode coating layer CCL may be the same as the negative electrode current collector and the negative electrode coating layer discussed above with respect to FIG. 1.

FIG. 8 illustrates a conceptual diagram showing a pressing step for fabricating an all-solid-state battery, according to some example embodiments of the present disclosure. Referring to FIG. 8, the mono-cell MNC may be pressed by a pair of pressing rollers RL. The mono-cell MNC may be a cell stack.

The pair of rollers RL may include a heating device (not shown) for increasing a temperature, as discussed above with respect to FIGS. 5 and 6. The heating device may be any suitable device capable of heating the roller RL. As an all-solid-state battery according to some example embodiments of the present disclosure includes the lubricant additive LM, fluidity and formability may be increased to reduce a pressure applied from the roller RL. For example, the pressing pressure according to present disclosure may be less than a pressing pressure applied in a typical roll-pressing method for fabricating an all-solid-state battery. The addition of the lubricant additive LM may increase adhesion between the positive electrode active material layer AML and the solid electrolyte layer SE, or between the negative electrode layer CL and the solid electrolyte layer SE, so that a stack structure may be combined even under a lower pressure.

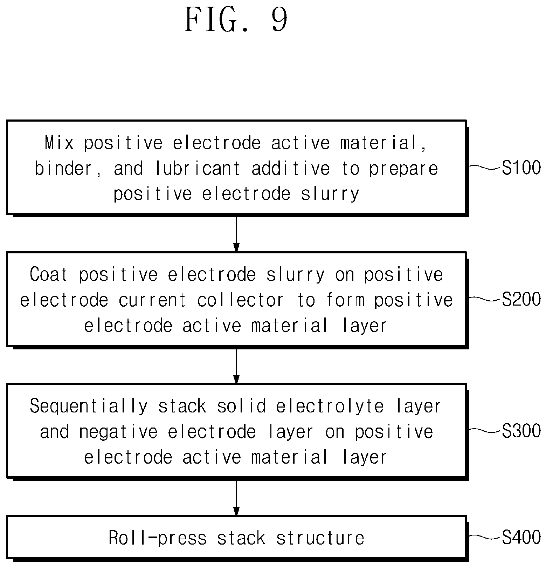

FIG. 9 is a flow chart illustrating a method of fabricating an all-solid-state battery according to some example embodiments of the present disclosure. Referring to FIG. 9, according to some example embodiments of the present disclosure, a method of fabricating an all-solid-state battery may include mixing a positive electrode active material AM, a binder BND, and a lubricant additive LM to prepare a positive electrode slurry (S100), coating on a positive electrode current collector COL1 the positive electrode slurry to form a positive electrode active material layer AML (S200), stacking, e.g., sequentially stacking, a solid electrolyte layer SE and a negative electrode layer CL on the positive electrode active material layer AML (S300), and roll-pressing the stack structure (S400).

The formation step S200 may include performing a roll-pressing process.

The stacking, e.g., sequential stacking step S300 may include stacking and roll-pressing the solid electrolyte layer SE on the positive electrode active material layer AML.

The stacking, e.g., sequential stacking step S300 may further include stacking and roll-pressing the negative electrode layer CL on the solid electrolyte layer SE.

The preparation step S100 may include providing a compound including a repeating unit represented by Chemical Formula 1, a compound including a repeating unit represented by Chemical Formula 2, or a combination thereof. A description of the lubricant additive LM may be as discussed above with respect to FIG. 2.

The formation step S200 may include using any method for applying the positive electrode slurry on the positive electrode current collector COL1. For example, the formation step S200 may include performing a typical method, in which the positive electrode slurry is coated on the positive electrode current collector COL1, used for fabricating a rechargeable lithium battery or an all-solid-state battery. However, differently from a typical method, a lubricant additive LM may be included in the positive electrode slurry coated on the positive electrode current collector COL1. In addition, the coating of the positive electrode slurry on the positive electrode current collector COL1 may be performed at room temperature. In an example embodiment, the coating of the positive electrode slurry on the positive electrode current collector COL1 may be performed at a temperature that is equal to or less than about a melting point of the lubricant additive LM. For example, the coating of the positive electrode slurry on the positive electrode current collector COL1 may be performed at a temperature that is less than about 100°C. In a case where the lubricant additive LM is included in the solid electrolyte layer SE, the coating process may also be performed at room temperature.

The stacking, e.g., sequential stacking step S300 may be the same as a typical method of fabricating an all-solid-state battery. For example, the solid electrolyte layer SE may be stacked on the positive electrode active material layer AML, and then the negative electrode layer CL may be stacked on the solid electrolyte layer SE.

The roll pressing step S400 may include roll-pressing the positive electrode active material layer AML, the solid electrolyte layer SE, and the negative electrode layer CL that are stacked. For example, the stack structure may be the same as the mono-cell MNC discussed above with respect to FIG. 1.

When the stack structure is pressed by a roll-pressing method, a roller may have a temperature that is greater than room temperature. This temperature condition may be provided to achieve a liquid state of the lubricant additive LM included in one or both of the positive electrode active material layer AML and the solid electrolyte layer SE. For example, a temperature above a melting point of the lubricant additive LM may be maintained to increase fluidity of one, or both, of the positive electrode active material layer AML and the solid electrolyte layer SE in each of which the lubricant additive LM is included. Therefore, a heating roller may press the stack structure to fabricate an all-solid-state battery even under a low pressure.

When a lubricant additive according to some example embodiments of the present disclosure is included in one, or both, of a positive electrode layer and a solid electrolyte layer, fluidity of an electrode plate may be increased to improve formability of the all-solid-state battery.

Moreover, the positive electrode layer or the solid electrolyte layer containing the lubricant additive may have increased adhesion therebetween, and thus a solid electrolyte may be readily adhered to the positive or negative electrode layer even in a pressing process under a low pressure.

Although some example embodiments of the present disclosure have been discussed with reference to accompanying figures, it is understood that various changes in form and details may be made therein without departing from the spirit and scope of the present disclosure. It is apparent to those skilled in the art that various substitution, modifications, and changes may be thereto without departing from the scope and spirit of the present disclosure.

### Embodiment 1

A positive electrode active material, a binder, and a lubricant additive were mixed to prepare a positive electrode slurry. Paraffin with a carbon number between 18 and 40 was included as the lubricant additive. The lubricant additive was adjusted to have an amount of about 0.3 wt% in the positive electrode slurry. The positive electrode slurry containing the lubricant additive was coated on a positive electrode current collector to manufacture a positive electrode layer. A solid electrolyte layer and a negative electrode were stacked on the manufactured positive electrode layer, and then pressed using a roll-pressing method under a pressure of ≥t 0.05 tons/cm to ≤ 2.5 tons/cm at a temperature of about 100°C.

### Embodiment 2

A positive electrode active material, a binder, and a lubricant additive were mixed to prepare a positive electrode slurry. Polyethylene oxide (PEO) with monomer repeating units between 20 and 25 was included as the lubricant additive. The lubricant additive was adjusted to have an amount of about 0.3 wt% in the positive electrode slurry. The positive electrode slurry containing the lubricant additive was coated on a positive electrode current collector to manufacture a positive electrode layer. A solid electrolyte layer and a negative electrode were stacked on the manufactured positive electrode layer, and then pressed using a roll-pressing method under a pressure of ≥ 0.05 tons/cm to ≤ 2.5 tons/cm at a temperature of about 100°C.

### Comparative 1

A positive electrode active material and a binder were mixed to prepare a positive electrode slurry. No lubricant additive was included in the positive electrode slurry. The prepared positive electrode slurry was coated on a positive electrode current collector to manufacture a positive electrode layer.

### Evaluation

Compressibility characteristics of the positive electrode or the solid electrolyte layer manufactured in Embodiments 1 to 3 and Comparatives 1 and 2 were evaluated.

The evaluation of the compressibility characteristics was conducted by measuring mixture densities at different roll-pressing pressure conditions ranging from ≥ 0.05 tons/cm to ≤ 2.5 tons/cm.

An electrode plate may refer to the positive electrode or the solid electrolyte layer.

**Table 1:**

| | Lubricant additive | | Linear pressure (tons/cm) | | | | | | | | | |
|---|---|---|---|---|---|---|---|---|---|---|---|---|
| | | | - | 0.05 | 0.2 | 0.4 | 0.6 | 0.8 | 1.0 | 1.5 | 2.0 | 2.5 |
| Mixture density (g/cc) | Embodiment 1 | Paraffin | 2.78 | 2.96 | 3.19 | 3.29 | 3.39 | 3.4 7 | 3.5 | 3.4 9 | 3.5 | 3.4 8 |
| | Embodiment 2 | Polyethylene oxide | 2.82 | 2.95 | 3.15 | 3.28 | 3.37 | 3.4 9 | 3.4 8 | 3.5 2 | 3.4 9 | 3.5 1 |
| | Comparative 1 | - | 2.79 | 2.85 | 2.99 | 3.16 | 3.21 | 3.2 9 | 3.3 8 | 3.4 5 | 3.5 1 | 3.5 2 |

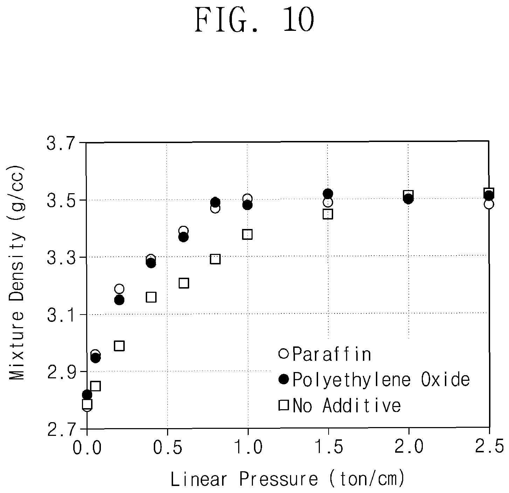

Referring to Table 1 and FIG. 10, it may be observed that an increase in the amount of the lubricant additive causes an improvement in compressibility characteristics of the positive electrode layer or the solid electrolyte layer. For example, it may be observed that, within the mixture density range of ≥ 2.9 g/cc to ≤ 3.5 g/cc, there is a significant difference in compressibility characteristics between the positive electrode layer or the solid electrolyte layer containing the lubricant additive, and the positive electrode layer or the solid electrolyte layer containing no lubricant additive. This may indicate that an electrode plate containing the lubricant additive exhibits increased compressibility characteristics at low linear pressures.

Furthermore, it may be ascertained that, in the case of the mixture density of the positive electrode or the solid electrolyte layer containing the lubricant additive is in a range of ≥ 2.9 g/cc to ≤ 3.5 g/cc, the compressibility characteristics are most desired or improved when the lubricant additive is included in an amount in a range of ≥ 0.1 wt% to ≤ 1.0 wt%.

An all-solid-state battery according the present disclosure may be fabricated by a pressing process at a low pressure by adjusting formability of an electrode plate in accordance with temperature.

In a method of fabricating an all-solid-state battery according to the present disclosure, an electrode plate may be readily formed and combined even at low pressures by varying a roll-pressing temperature while securing the stability of the electrode plate, thereby facilitating the production of the all-solid-state battery.

## Claims

1. An all-solid-state battery (10), comprising:
a positive electrode layer (100; AL);
a negative electrode layer (200; CL); and
a solid electrolyte layer (300) between the positive electrode layer (100; AL) and the negative electrode layer (200; CL),
wherein at least one of the positive electrode layer (100; AL) and the solid electrolyte layer (300) comprises a lubricant additive (LM),
wherein the lubricant additive (LM) comprises one of:
a first compound that comprises a repeating unit represented by Chemical Formula 1;
a second compound that comprises a repeating unit represented by Chemical Formula 2; and
a combination of the first compound and the second compound, 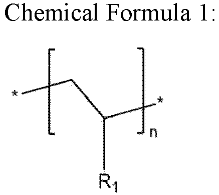
wherein, in Chemical Formula 1,
n is an integer in a range between 5 and 50, and
R₁ comprises a hydroxyl group, a methyl group, an amino group, an acryl group, benzene, acrylonitrile, amide, an alkyl group, or a carboxyl group, 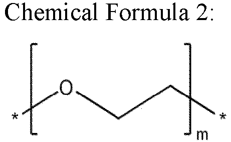
wherein, in Chemical Formula 2, m is an integer in a range between 5 and 50.

2. The all-solid-state battery (10) of claim 1, wherein
in Chemical Formula 1, n is an integer in a range between 5 and 50, and
in Chemical Formula 2, m is an integer in a range between 5 and 50.

3. The all-solid-state battery (10) of claim 1 or 2, wherein the lubricant additive (LM) comprises at least one of paraffin, low molecular weight polyethylene oxide (PEO), low molecular weight polyethylene (PE), low molecular weight polypropylene (PP), hexadecane, octadecane, tetracosanoic acid, eicosane, triacontane, and polyalphaolefin (PAO).

4. The all-solid-state battery (10) according to any one of claims 1 to 3, wherein the positive electrode layer (100; AL) comprises:
a positive electrode current collector (110; COL1); and
a positive electrode active material layer (120; AML) on the positive electrode current collector (110; COL1),
wherein the positive electrode active material layer (120; AML) comprises a positive electrode active material (AM), a binder (BND), and the lubricant additive (LM), and
wherein an amount of the lubricant additive (LM) in the positive electrode active material layer (120; AML) is in a range of ≥ 0.1 wt% to ≤ 1.0 wt%.

5. The all-solid-state battery (10) according to any one of claims 1 to 4, wherein the solid electrolyte layer (300) comprises a solid electrolyte, a binder (BND), and the lubricant additive (LM),
wherein an amount of the lubricant additive (LM) in the solid electrolyte layer (300) is in a range of ≥ 0.1 wt% to ≤ 1.0 wt%.

6. The all-solid-state battery (10) according to any one of claims 1 to 5, wherein the solid electrolyte layer (300) comprises an argyrodite-type solid electrolyte.

7. The all-solid-state battery (10) according to any one of claims 1 to 6, wherein the negative electrode layer (200; CL) comprises:
a negative electrode current collector (210; COL2); and
a negative electrode coating layer (220; CCL) on the negative electrode current collector (210; COL2),
wherein the negative electrode coating layer (220; CCL) comprises:
at least one of magnesium (Mg), gold (Au), platinum (Pt), palladium (Pd), silicon (Si), silver (Ag), aluminum (Al), bismuth (Bi), tin (Sn), and zinc (Zn); and
at least one of carbon black, acetylene black, furnace black, Ketjen black, and graphene.

8. A method of fabricating an all-solid-state battery (10), the method comprising:
mixing a positive electrode active material (AM), a binder (BND), and a lubricant additive (LM) to prepare a positive electrode slurry;
coating on a positive electrode current collector (110; COL1) the positive electrode slurry to form a positive electrode active material layer (S300; AML); and
stacking a solid electrolyte layer (300) and a negative electrode layer (200; CL) on the positive electrode active material layer (S300; AML),
wherein the lubricant additive (LM) comprises one of:
a first compound that comprises a repeating unit represented by Chemical Formula 1;
a second compound that comprises a repeating unit represented by Chemical Formula 2; and
a combination of the first compound and the second compound, 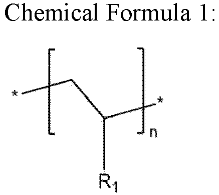
wherein, in Chemical Formula 1,
n is an integer in a range between 5 and 50, and
R₁ comprises a hydroxyl group, a methyl group, an amino group, an acryl group, benzene, acrylonitrile, amide, an alkyl group, or a carboxyl group, 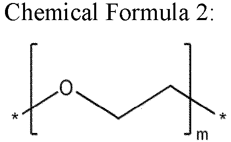
wherein, in Chemical Formula 2, m is an integer in a range between 5 and 50.

9. The method of claim 8, wherein the lubricant additive (LM) comprises at least one of paraffin, low molecular weight polyethylene oxide (PEO), low molecular weight polyethylene (PE), low molecular weight polypropylene (PP), hexadecane, octadecane, tetracosanoic acid, eicosane, triacontane, and polyalphaolefin (PAO).

10. The method of claim 8 or 9, wherein an amount of the lubricant additive (LM) included in the positive electrode active material layer (120; AML) is in a range of ≥ 0.1 wt% to ≤ 1.0 wt%.

11. The method according to any one of claims 8 to 10, wherein stacking the solid electrolyte layer (300) and the negative electrode layer (200; CL) on the positive electrode active material layer (120; AML) comprises roll-pressing a stack structure (S400) in which the positive electrode active material layer (120; AML), the solid electrolyte layer (300), and the negative electrode layer (200; CL) are stacked,
wherein roll-pressing the stack structure (S400) is performed at a temperature in a range of ≥ 60°C to ≤ 150°C.

12. The method according to any one of claims 8 to 11, wherein stacking the solid electrolyte layer (300) and the negative electrode layer (200; CL) on the positive electrode active material layer (S300; AML) comprises roll-pressing a stack structure (S400), wherein roll-pressing the stack structure (S400) is performed at a pressure in a range of ≥ 0.05 tons/cm to ≤ 2.5 tons/cm.

13. The method according to any one of claims 8 to 12, wherein stacking the solid electrolyte layer (300) and the negative electrode layer (200; CL) on the positive electrode active material layer (S300; AML) comprises:
stacking a positive electrode solid electrolyte layer (300a) on the positive electrode active material layer (S300; AML) to form a positive electrode stack structure (S400);
applying a first pressure after stacking the positive electrode solid electrolyte layer (300a) on the positive electrode active material layer (S300; AML);
stacking a negative electrode solid electrolyte layer (300b) on the negative electrode layer (200; CL) to form a negative electrode stack structure (S400); and
applying a second pressure after stacking the negative electrode solid electrolyte layer (300b) on the negative electrode layer (200; CL),
wherein the first pressure is greater than the second pressure.

14. The method according to any one of claims 8 to 13, wherein stacking the solid electrolyte layer (300) and the negative electrode layer (200; CL) on the positive electrode active material layer (S300; AML) comprises:
applying the first pressure after stacking the positive electrode solid electrolyte layer (300a) on the positive electrode active material layer (S300; AML);
wherein applying the first pressure is performed at a temperature in a range of ≥ 100°C to ≤ 200°C.

15. The method according to any one of claims 8 to 14, wherein stacking the solid electrolyte layer (300) and the negative electrode layer (200; CL) on the positive electrode active material layer (S300; AML) comprises:
applying the second pressure after stacking the negative electrode solid electrolyte layer (300b) on the negative electrode layer (200; CL),
wherein applying the second pressure is performed at a temperature in a range of ≥ 100°C to ≤ 200°C.
